# EUROPEAN PATENT APPLICATION

(11) **EP 2 884 147 A1**
(43) Date of publication of application: **17.06.2015**
(21) Application number: 13197484.2
(22) Date of filing: 16.12.2013
(51) Int. Cl.: F16L 41/02, F16L 47/32, B01D 61/10, B01D 65/00, B29D 23/00, B29L 31/24

(54) **Adaptor tee**

(71) Applicant: Siemens Aktiengesellschaft, 80333 München (DE)
(72) Inventor: Diaz Mesa, Armando, 0676 Osol (NO)
(74) Representative: Maier, Daniel Oliver

(57) **Abstract**

An adaptor tee for a filtration system, in particular for the permeate outlet port of a filtration vessel is provided. The adaptor tee has a main body (20) of a single piece of plastic material having a cylindrical shape extending along an axial direction (14) between opposing first and second ends. An inlet opening (11) is provided in the first end of the main body for connecting the adaptor tee to a permeate outlet port of a filtration vessel. A first outlet opening (12) is provided in the second end of the main body (20) for connecting a sample valve (41). A first flow passage (15) extends through the main body (20) between the inlet opening (11) and the first outlet opening (12). Furthermore, a second outlet opening (13) through the lateral surface of the main body (20) for a connection to a collection conduit is provided. A second flow passage (19) extends through the main body (20) between the first flow passage (15) and the second outlet opening (13). The second flow passage (19) meets the first flow passage (15) in a T-junction.

## Description

### Field of the invention

The present invention relates to adaptor tee for a filtration system, in particular for the permeate outlet port of a filtration vessel. The invention further relates to a filtration system and to a method of manufacturing an adaptor tee.

### Background

Filtration vessels, such as selective rejection (SR) or reverse osmosis (RO) membrane vessels often have an outlet port for the permeate, i.e. for the fluid that is produced by the filtration process. Such filtration vessel may for example be used in the oil and gas industry for the treatment of water, in particular for water injection into a hydrocarbon well. Water treatment by such membrane vessel may for example be performed for sulfate removal.

From the outlet port of the filtration vessel, a flow connection is generally required to a collection system, which collects the permeate of several filtration vessels. It is desirable to be capable of taking a sample from the permeate produced from the filtration vessel.

To provide the flow connection from the permeate outlet port of the filtration vessel to the collection header and for providing a sample port, standard fittings may be used. Such fittings are often made of a material like CPVC (chlorinated polyvinyl chloride). A problem occurring with such fittings is that the material has a relatively low UV-resistance. Furthermore, the pressure to which such standard fittings can be exposed is relatively limited. The pressure rating is generally not suitable for oil and gas applications, in particular offshore applications. Also, to provide such different connections, standard fittings comprise several pieces mounted together, resulting in an increased risk of leakage.

In order to overcome the above problems, one possibility may include the use of metal fittings. Due to the requirement of corrosion resistance, stainless steel fittings would need to be used. Yet such fittings would result in a significantly increased weight, and would furthermore result in a very expensive solution. Also, the risk of leakage due to the several pieces being required remains.

It is desirable to provide a corrosion resistant, UV-resistant fitting which has relatively low weight and is cost-efficient to produce. Furthermore, it is desirable that such fitting is capable of withstanding elevated pressures as occurring in the water treatment for the oil and gas industry. Also, it is desirable to reduce complexity and the risk of leakage.

### Summary

Accordingly, there is a need to mitigate at least some of the drawbacks mentioned above and to provide an improved fitting for the permeate outlet port of a filtration vessel.

This need is met by the features of the independent claims. The dependent claims describe embodiments of the invention.

According to a first embodiment of the invention, an adaptor tee for a filtration system, in particular for the permeate outlet port of a filtration vessel, is provided. The adaptor tee comprises a main body of a single piece of plastic material having a cylindrical shape extending along an axial direction between opposing first and second ends. An inlet opening is provided in the first end of the main body. A first outlet opening is provided in the second end of the main body. A first flow passage extends through the main body between the inlet opening and the first outlet opening. A second outlet opening is further provided through the lateral surface of the main body. A second flow passage extends through the main body between the first flow passage and the second outlet opening, it may for example extend substantially perpendicular to the first flow passage. The second flow passage may meet the first flow passage in a T-junction. The inlet opening provides an inlet connection adapted to be coupled to a permeate outlet port of a filtration vessel. At the first outlet opening, a first outlet connection is provided which is adapted to be coupled to a sample valve. At the second outlet opening, a second outlet connection is provided which is adapted to be coupled to a collection conduit. The first fluid passage has a larger inner diameter first section having a first inner diameter and a smaller inner diameter second section having a second inner diameter, the second inner diameter being smaller than the first inner diameter. The T-junction is located in the first section. The second flow passage has a third inner diameter larger than the second inner diameter.

By means of such adaptor tee, a single piece may be provided which can be mounted to the permeate outlet port of the filtration vessel, and to which a conduit, such as a hose, can be connected for directing the permeate into e.g. a collection header. Furthermore, to the first outlet opening, a sample valve may be connected. Accordingly, since the whole fitting is made of a single piece, the risk of leakage can be reduced. With only three threaded connections, the adaptor tee may be connected to the permeate outlet port, the sample valve and the conduit for collecting the permeate. Also, higher pressure ratings may be achieved with such single piece adaptor tee.

In an embodiment, the first flow passage has a tapered section between the first section with the larger first inner diameter and the second section with the smaller second inner diameter. A reduced diameter flow passage can thus be provided towards the sample valve.

In some embodiments, the first inner diameter and the third inner diameter may be about the same size. Accordingly, a relatively unrestricted flow of the permeate from the inlet opening to the second outlet opening may be ensured. In some embodiments, the third inner diameter may be slightly larger than the first inner diameter in order to ensure a mostly unrestricted flow.

In an embodiment, the main body is made of polyethylene (PE). Preferably, it is made of high molecular weight (HMW) polyethylene or ultra high molecular weight (UHMW) polyethylene. In a particular configuration, the main body may be made out of PE-1000. In such configuration, a relatively low weight adaptor tee of high mechanical strength may be achieved. In particular, such adaptor tee may have an improved UV-resistance and may be suitable for higher pressures of the permeate.

In an embodiment, the main body is shaped such that the adaptor tee is suitable for an internal pressure of at least 10 bar, preferably at least 20 bar. In particular, it can be configured so as to be suitable up to a pressure of at least 30 bar. The pressures defined herein are gauge pressures, i.e. pressure measured above atmospheric pressure.

In an embodiment, the main body has at least a first cylindrical section having a first outer diameter, wherein the second flow passage and the second outlet opening are comprised in the first cylindrical section of the main body. The first cylindrical section may for example extend over at least 50 % of the axial extension of the main body, preferably over at least 70 % of its axial extension. The ratio of the first outer diameter to the first inner diameter may at least be 1.5:1. In other embodiments, the ratio may be at least 2:1, 2.5:1 or at least 3:1. By means of such ratios, an adaptor tee of high strength may be achieved which is capable of withstanding high internal pressures, in excess of 10, 20 or even 30 bar.

In an embodiment, the main body has at least a first cylindrical section having a first outer diameter and a second cylindrical section having a second outer diameter, the first outer diameter being larger than the second outer diameter. The second flow passage and the second outlet opening are comprised in the first cylindrical section of the main body. In such configuration, the size and weight of the adaptor tee may be reduced while providing high strength flow passages for achieving a high pressure tolerance.

In some embodiments, the first cylindrical section may extend from the first end of the main body to the proximity of the second end of the main body, it may for example extend from the first end over more than 50 % or more than 70 % of the axial extension of the main body. The second cylindrical section may then be located in proximity to the second end of the main body. In other embodiments, the second cylindrical section may be located in proximity to the first end of the main body.

In an embodiment, the main body has at least a first cylindrical section having a first outer diameter, wherein the first cylindrical section has a cutaway portion providing a substantially flat face parallel to the axial direction of the main body. The second outlet opening is located in the substantially flat face. Providing a connection to the second outlet opening may be facilitated in such configuration.

In an embodiment, the inlet connection and the second outlet connection are female connections, in particular female connections having an inner thread. The permeate outlet port and the end of the conduit for collecting the permeate may then be provided with male connections having outer threads, thus enabling a relatively simple assembly.

In an embodiment, the main body has a cylindrical section of reduced diameter adjacent to the second end, wherein the cylindrical section of reduced diameter provides the first outlet connection. The first outlet connection is a male connection having an outer thread on the cylindrical section of reduced diameter. Attachment of a sample valve to such type of connection may be facilitated.

In an embodiment, the main body has a first cylindrical section having a first outer diameter and a second cylindrical section having a second outer diameter, the first diameter being larger than the second diameter. It may further have a third cylindrical section having an outer diameter similar to the second outer diameter, the first cylindrical section being located between the second end and the third cylindrical sections. A compact and low weight but strong design of the adaptor tee may thus be achieved.

The cylindrical section of reduced diameter, which provides the first outlet connection, may have an outer diameter smaller than the second outer diameter. The cylindrical section of reduced diameter may be located between the third cylindrical section and the second end of the main body.

In some embodiments, in particular where a cylindrical section having the above mentioned second outer diameter is provided, a reinforcement ring may be positioned around a cylindrical section of the main body. Accordingly, the pressure tolerance of the adaptor tee may further be improved. In other embodiments, the wall thickness of the adaptor tee may be increased in such regions instead of using a reinforcement ring.

Such reinforcement ring may be positioned on the cylindrical section by a snug fit or interference fit. The outer diameter of the reinforcement ring may be similar to the outer diameter of the above mentioned first cylindrical section. Also, the ratio of the outer diameter of such reinforcement ring to the first inner diameter may be similar to the above mentioned ratios, i.e. it may for example be at least 0.5:1, 2:1, 2.5:1 or 3:1.

In an embodiment, the reinforcement ring is positioned around the second cylindrical section.

A further embodiment of the invention provides a filtration system comprising a filtration vessel having a permeate outlet port, a header (or collector) for collecting permeate produced from the filtration vessel, the header having an inlet, and an adaptor tee which is configured in accordance with any of the above described embodiments. The inlet connection of the adaptor tee is connected to the permeate outlet port of the filtration vessel. Furthermore, a conduit, such as a hose, is connected between the second outlet connection of the adaptor tee and the inlet of the header. In such configuration, a safe and secure connection between the filtration vessel and the header can be achieved.

It should be clear that in other embodiments, plural filtration vessels may be provided which are connected via corresponding adaptor tees to inlets of the header, so that in the header, permeate produced by several filtration vessels can be collected.

In an embodiment, the filtration system further comprises a sample valve mounted with a fluid inlet side to the first outlet connection of the adaptor tee. Accordingly, a sample can be taken from the permeate produced by the filtration vessel in such configuration.

In a further embodiment, the filtration system comprises a probe plug having a sample outlet port, which probe plug is mounted to a fluid outlet side of the sample valve. The sample outlet port may include an inner O-ring, so that a conduit for collecting a sample of the permeate can easily be connected thereto.

A further embodiment of the invention provides a method of manufacturing an adaptor tee. The method comprises the steps of providing a main body of a single piece of plastic material having a cylindrical shape extending along an axial direction between opposing first and second ends. An inlet opening is machined into the first end, and a first outlet opening is machined into the second end. A first flow passage extending through the main body between the inlet opening and the first outlet opening is machined into the main body. The method further comprises machining a second outlet opening through the lateral surface of the main body and a second flow passage extending between the first flow passage and the second outlet opening into the main body such that the second flow passage meets the first flow passage in a T-junction. The machining is performed such that the inlet opening provides an inlet connection and that the first and second outlet openings provide first and second outlet connections. The machining of the first and second flow passages is performed such that the first flow passage has a larger diameter first section having a first inner diameter and a smaller diameter second section having a second inner diameter. The T-junction is located in the first section. The machining is such that the second flow passage has a third inner diameter larger than the second inner diameter.

By means of such method, an adaptor tee may be manufactured which provides advantages similar to the ones outlined further above.

In embodiments of the method, the method may be performed so as to obtain the adaptor tee in any of the above described configurations and embodiments. For example, the machining may be such that the first inner diameter and the third inner diameter are substantially similar in size. The connections may be provided by machining an inner thread into the inlet opening and the second outlet opening, and by machining an outer thread on a cylindrical section of the main body which is provided adjacent to the second end of the main body.

It should be clear that the steps described above may be performed in any other order. The order may for example be chosen so as to facilitate or enhance the manufacturing of the adaptor tee.

It is to be understood that the features mentioned above and those yet to be explained below can be used not only in the respective combinations indicated, but also in other combinations or in isolation, without leaving the scope of the present invention.

### Brief description of the drawings

The forgoing and other feature and advantages of the invention will become further apparent from the following detailed description read in conjunction with the accompanying drawings. In the drawings, like reference numerals refer to like elements.
Figure 1 is a schematic diagram showing a sectional side view of an adaptor tee according to an embodiment of the invention.
Figure 2 is a schematic diagram showing a top view of an adaptor tee according to an embodiment of the invention.
Figure 3 is a schematic diagram showing a perspective view of an adaptor tee according to an embodiment of the invention.
Figure 4 is a schematic diagram showing a perspective view of adaptor tee according to a further embodiment of the invention.
Figure 5 is a picture showing a prototype of an adaptor tee according to an embodiment of the invention.
Figure 6 is a schematic block diagram showing a filtration system according to an embodiment of the invention.

### Detailed description

In the following, embodiments of the invention will be described in detail with reference to the accompanying drawings. It is to be understood that the following description of the embodiments is given only for the purpose of illustration and is not to be taken in a limiting sense.

It should be noted that the drawings are to be regarded as being schematic representations only, and elements in the drawings are not necessarily to scale with each other. Rather the representation of the various elements is chosen such that their function and general purpose become apparent to a person skilled in the art.

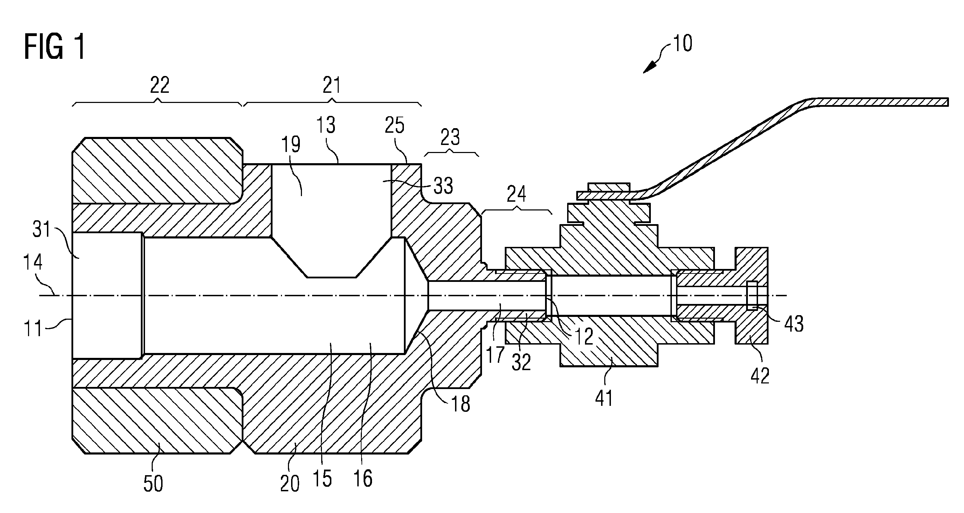

Figure 1 is a schematic drawing showing a sectional side view of an adaptor tee 10 according to an embodiment of the invention. The adaptor tee 10 comprises a main body 20 which is made of a single piece of plastic material. The main body 20 has a cylindrical shape which extends along the axial direction (or longitudinal axis) 14. At a first end, the main body 20 has a first inlet opening 11. At its second opposite end, the main body 20 has a first outlet opening 12. Between the inlet opening 11 and the outlet opening 12, a first flow passage 15 extends through the main body 20. The openings 11, 12 and the first flow passage 15 can for example be machined into the material of the main body 20.

The main body 20 further has a second outlet opening 13 provided in its outer lateral surface. The second outlet opening 13 lies in a plane parallel to the axial direction 14. A second flow passage 19 extends between the second outlet opening 13 and the first flow passage 15, for example in a direction perpendicular to the axial direction 14. The first and second flow passages meet in a T-shaped junction. The second outlet opening 13 and the second flow passage 19 may also be machined into the material of the main body 20.

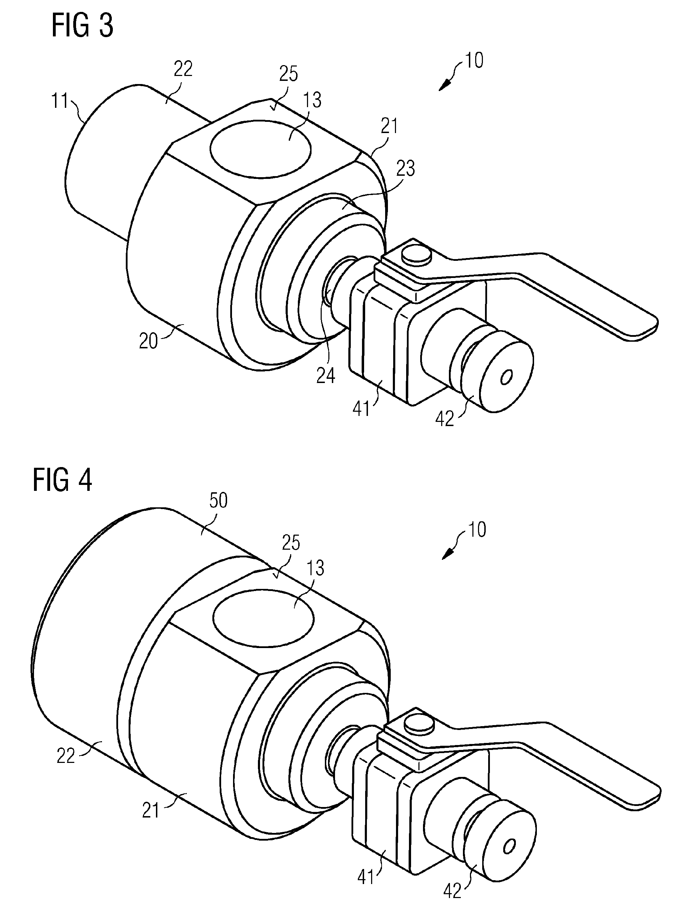

The cylindrically shaped main body 20 may be provided with a cutaway portion 25 at which part of the cylinder shape is cut away in a plane substantially parallel to the axial direction 14. The second outlet opening 13 can be provided in such plane, i.e. on the flat face of the cutaway portion as illustrated in more detail in figures 3 and 4.

The first flow passage 15 has a first section 16 having a larger inner diameter, and a second section 17 having a smaller inner diameter. A tapered section 18 is provided between the larger diameter section 16 and the smaller diameter section 17. An inlet connection 31 is provided at one end of the first flow passage in proximity to the inlet opening 11 and the first end of the main body 20. Inlet connection 31 is a female connection having an internal thread machined into the material of the main body 20. At the second end of the main body 20, in proximity to the first outlet opening 12, a first outlet connection is provided. The first outlet connection is preferably a male connection comprising an external thread machined into the main body 20 in proximity to its second end. First outlet connection 32 is adapted for connection to a sample valve 41.

The main body 20 is furthermore provided with a second outlet connection 33 in proximity to the second outlet opening 13. Second outlet connection 33 is preferably a female connection comprising internal threads machined into the main body 20 of the adaptor tee 10. It should be noted that this is an exemplary configuration of the adaptor tee 10, and that in other configurations, the first outlet connection 32 may for example be provided as a female connection, while one or both of the inlet connection 31 and the second outlet connection 33 may be provided as male connections.

In some embodiments, the second flow passage 19 has an inner diameter which is substantially similar to the inner diameter of the first section 16 of the first flow passage 15. Accordingly, the flow of a fluid from the inlet opening 11 to the second outlet opening 13 is essentially unrestricted. In other embodiments, the inner diameter of the flow passage 19 may be even larger than the inner diameter of the first section 16 of flow passage 15, in order to further reduce the flow resistance.

In the embodiment illustrated in figure 1, the main body 20 has a first cylindrical section 21 and a second cylindrical section 22. The outer diameter of the first cylindrical section 21 is larger than of the second cylindrical section 22, and the second outlet opening 13 and the second flow passage 19 are located in the first section 21. By means of such cylindrical shape with an enlarged outer diameter, the stability and strength of the adaptor tee can be improved, thus increasing the pressure tolerance. By the smaller diameter second section 22, an adaptor tee with reduced weight and a more compact design may be achieved.

For further increasing the pressure tolerance, the adaptor tee 10 can in a preferred embodiment be provided with the same outer diameter in the second cylindrical section 22 as in the first cylindrical section 21. For example, the first cylindrical section 21 may extend from the first end of the main body 20 (in which the inlet opening 11 is provided) to an axial position beyond the T-junction.

The main body 20 can furthermore have a cylindrical section of reduced diameter 24 located in proximity to the first outlet opening 12 at the second end of main body 20. The first outlet connection 32 in form of the male connection having an external thread can be provided in this section of reduced outer diameter 24. This is in particular possible due to the reduced inner diameter in the second section 17 of the first flow passage 15. A third cylindrical section 23 may be provided between the first cylindrical section 21 and the cylindrical section of reduced diameter 24. The third cylindrical section 23 may have a smaller diameter compared to the first cylindrical section 21, so that the size and weight of the adaptor tee 10 may furthermore be reduced. A high pressure tolerance may still be maintained, since in the third cylindrical section 23, the second section 17 or the tapered section 18 are located, both having a reduced inner diameter. The outer diameter of the second and third cylindrical sections 22, 23 may be substantially similar in some embodiments. As mentioned above, in other embodiment, no second cylindrical section 22 may be provided.

In the embodiment depicted in figure 1, a reinforcement ring 50 is provided around the second cylindrical section 22 of the adaptor tee 10. Accordingly, the pressure tolerance of the second section 22 of the main body 20 can be increased. The reinforcement ring 50 may have the same outer diameter as the first cylindrical section 21 and may be made of the same material as the main body 20. In other embodiments, it may be made of a stronger material, e.g. a metal, and may have a smaller outer diameter compared to the outer diameter of the first cylindrical section 21. A more compact design of the adaptor tee 10 may thus be achieved. Yet it is preferred that no reinforcement ring 50 is provided, but that the first cylindrical section 21 extends to the first end of the main body 20.

The adaptor tee 10 can be adapted to withstand an internal pressure of at least 10, preferably at least 20, more preferably at least 30 bar. The outer diameter of the cylindrical main body 20 may be chosen so as to be capable of withstanding such pressures. Such configuration makes the adaptor tee 10 applicable in oil and gas applications, in particular for the collection of permeate from a filtration system for water injection into a hydrocarbon well.

Connection 31 of the adaptor tee 10 can accordingly be adapted to be connectable to a permeate outlet port of a filtration vessel. The second outlet connection 33 can furthermore be adapted for being connected to a collection hose for collecting such permeate.

The main body 20 is made of a plastic material of relatively high strength and rigidity. In particular, it is made of a UV-resistant plastic material. Due to the use of plastic material, corrosion resistance can also be achieved.

Preferably, the main body is made of polyethylene (PE). As an example, high molecular weight (HMW) polyethylene or ultrahigh molecular weight (UHMW) polyethylene may be used. In a preferred embodiment, the main body is made of PE-1000.

In the embodiment of figure 1, a sample valve 41 is connected to the first outlet connection 32 of adaptor tee 10. This may for example be a ball valve having a handle for opening and closing the valve, as illustrated in figure 1. At the inlet side, the sample valve 41 is connected to the first outlet connection 32, and on the other side, a probe plug 42 is connected to the sample valve 41. The combination of adaptor tee 10, sample valve 41 and probe plug 42 may be termed probe valve assembly, and the present application may also be directed to such probe valve assembly comprising the adaptor tee 10 in any of the disclosed configurations.

The probe plug 42 includes an inner O-ring 43. Accordingly, a tube for taking a sample can be inserted into the probe plug 42, and the sample valve 41 can be opened briefly to take a sample of permeate produced by a connected filtration vessel.

In an exemplary embodiment, the outer diameter of the first cylindrical section 21 may be about 120 mm. The inner diameter of the inlet opening 11 and the second outlet opening 13 may be about 1.5 inch, i.e. about 38.1 mm. The inlet connection and the second outlet connection may for example comprise NPT threads, e.g. NPT 1.5". In such embodiment, the outer diameter of the second cylindrical section 22 may for example be between about 70 mm and about 120 mm.

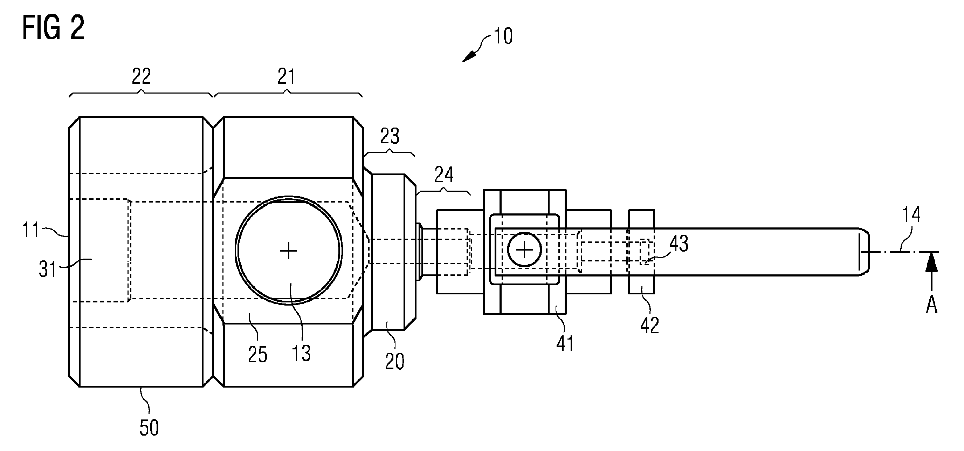

Figure 2 is a schematic drawing showing a top view of the embodiments of the adaptor tee 10 of figure 1. In figure 2, the cutaway portion 25 in which the second outlet opening 13 is provided can be clearly recognized. Furthermore, as can be seen, the outer diameter in the second cylindrical section 22 may be substantially similar as the outer diameter in the first cylindrical section 21, e.g. by extension of the first cylindrical section 21 towards the first end of the main body 20, or by making use of the reinforcement ring 50.

Figure 3 shows a perspective view of the adaptor tee 10 of figures 1 and 2, without a reinforcement ring 50 being provided. As can be seen, the outer diameter in the second cylindrical section 22 is smaller than in the first cylindrical section 21. But as mentioned above, the outer diameter in the second cylindrical section 22 may be increased and may even be made similar to the outer diameter in the first cylindrical section 21, for example in dependence on the pressure rating of the adaptor tee 10.

Figure 4 shows a perspective view of the adaptor tee 10 of figure 3 with a reinforcement ring 50 being mounted to the second cylindrical section 22. When the second cylindrical section 22 is provided with the same outer diameter as the first cylindrical section 21, the grove between the first and second cylindrical sections 21, 22 depicted in figure 4 does not need to be provided, i.e. the adaptor tee 10 may have a continuous outer cylindrical face in the sections 21, 22.

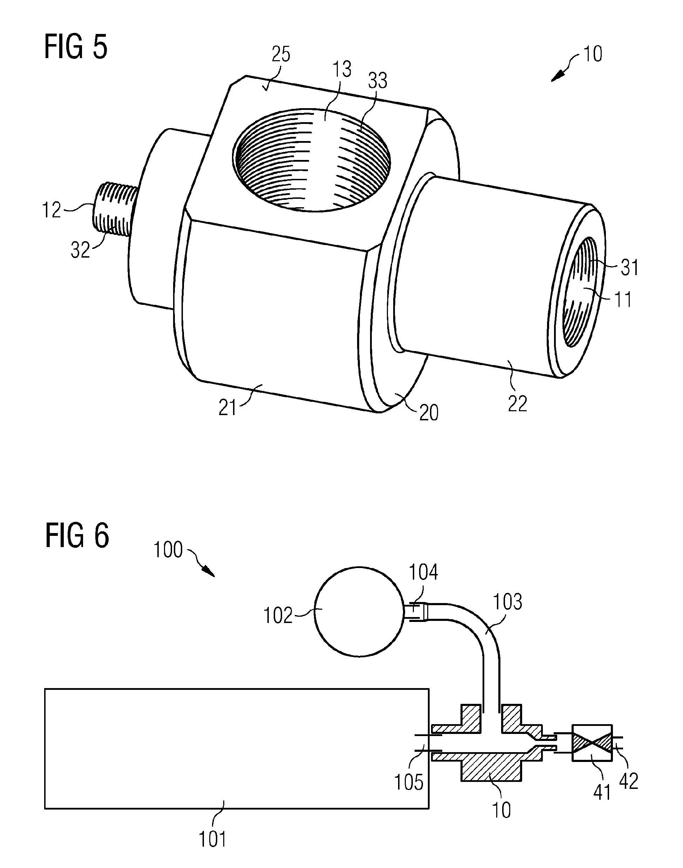

Figure 5 shows a picture of a prototype of an adaptor tee 10 according to an embodiment of the invention (note that it is oriented differently compared to the preceding figures). As can be seen in figure 5, the first outlet connection 32 is provided on a cylindrical section of reduced diameter at the second end of the main body 20 in form of an outer thread. Furthermore, as can be seen in figure 5, the second outlet connection 33 provided at the second opening 13 has the form of an internal thread provided in the second flow passage 19. The cutaway portion 25 in which the second outlet opening 13 is provided is furthermore well visible in figure 5. Again, figure 5 has a second cylindrical section 22 with a smaller outer diameter, although it should be clear that this second section 22 may have an outer diameter similar to the one of the first section 21, or it may be provided with a reinforcement ring 50 as explained above.

Figure 6 shows a filtration system 100 according to an embodiment of the invention. The filtration system 100 comprises a filtration vessel 101 having a permeate outlet port 105. Fluid which is filtered within the filtration vessel 101, e.g. by passing through membranes using selective rejection (SR) filtration or reverse osmosis (RO) filtration is given out through the permeate outlet port 105. Ports for the supply of fluid to be filtered and for giving out the retentate are also provided in the filtration vessel 101 but are not shown in the simplified schematic drawing of figure 6.

Filtration system 100 furthermore comprises an adaptor tee 10 which is configured in accordance with any of the above described embodiments and configurations. Adaptor tee 10 is connected to the permeate outlet port 105. Filtration system 100 furthermore comprises a header 102, which can have the form of a pipe running for example perpendicular to the plane of the drawing. A collection hose 103 is connected to the second outlet connection 33 of the adaptor tee 10 and furthermore connected to an inlet port 104 of the header 102. In such configuration, it is possible to collect the permeate produced by the filtration vessel 101 in an easy and efficient way, while reducing the risk of leakage. Due to the adaptor tee 10 being capable of operating at elevator pressures, the filtration system 100 can be used in the oil and gas industry, e.g. for the filtration of injection water. Filtration system 100 furthermore comprises a sample valve 41 connected to the first outlet connection 31 of the adaptor tee 10 and a probe plug 42 connected to the other side of the sample valve 41. The taking of a sample from the permeate produced by filtration vessel 101 is thus facilitated. The filtration system 100 can comprise several filtration vessels 101 connected in a similar way to the header 102, i.e. via an adaptor tee 10 and a collection hose 103. Accordingly, by making use of such sample valve 41 and probe plug 42, it is possible to take a sample of each individual filtration vessel 101 and to detect a malfunction of an individual filtration vessel 101.

In summary, by embodiments of the present invention, several advantages can be obtained, in particular for the collection of permeate for oil and gas applications. By providing the adaptor tee as a single piece of material, instead of several separate pieces as in conventional systems, the risk of leakage can be reduced. Furthermore, maintenance and replacement can be facilitated. Also, such configuration keeps the weight of the adaptor tee low. The plastic material can provide a good UV and corrosion resistance. Furthermore, by means of the outlined embodiments, a strong non-fragile design can be achieved. This leads to higher possible design pressures, they may be at least 20 bar or even up to 30 bar above atmospheric pressure. Also, the production costs of such adaptor tee can be reduced compared to conventional solutions.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

## Claims

1. A adaptor tee for a filtration system, in particular for the permeate outlet port of a filtration vessel, comprising
- a main body (20) of a single piece of plastic material having a cylindrical shape extending along an axial direction (14) between opposing first and second ends,
- an inlet opening (11) in the first end of the main body (20),
- a first outlet opening (12) in the second end of the main body (20),
- a first flow passage (15) extending through the main body (20) between the inlet opening (11) and the first outlet opening (12),
- a second outlet opening (13) through the lateral surface of the main body (20), and
- a second flow passage (19) extending through the main body (20) between the first flow passage (15) and the second outlet opening (13), the second flow passage (19) meeting the first flow passage (15) in a T-junction,
wherein at the inlet opening (11), an inlet connection (31) is provided which is adapted to be coupled to a permeate outlet port of a filtration vessel, wherein at the first outlet opening (12), a first outlet connection (32) is provided which is adapted to be coupled to a sample valve, wherein at the second outlet opening (13), a second outlet connection (33) is provided which is adapted to be coupled to a collection conduit,
wherein the first flow passage (15) has a first section (16) having a first inner diameter and a second section (17) having a second inner diameter smaller than the first inner diameter, the T-junction being located in the first section (15),
and wherein the second flow passage (19) has a third inner diameter larger than the second inner diameter.

2. The adaptor tee according to claim 1, wherein the main body (20) is made of polyethylene, in particular of high molecular weight (HMW) polyethylene or ultra high molecular weight (UHMW) polyethylene.

3. The adaptor tee according to claim 1 or 2, wherein the main body (20) has at least a first cylindrical section (21) having a first outer diameter, wherein the second flow passage (19) and the second outlet opening (13) are comprised in the first cylindrical section (21) of the main body, wherein the ratio of the first outer diameter to the first inner diameter is at least 1.5:1, preferably at least 2:1 or at least 3:1.

4. The adaptor tee according to any of the preceding claims, wherein the main body (20) has at least a first cylindrical section (21) having a first outer diameter and a second cylindrical section (22) having a second outer diameter, the first diameter being larger than the second diameter, wherein the second flow passage (19) and the second outlet opening (13) are comprised in the first cylindrical section (21) of the main body.

5. The adaptor tee according to any of the preceding claims, wherein the main body (20) has at least a first cylindrical section (21) having a first outer diameter, wherein the first cylindrical section (21) has a cut away portion (25) providing a substantially flat face parallel to the axial direction (14) of the main body (20), wherein the second outlet opening (13) is located in the substantially flat face.

6. The adaptor tee according to any of the preceding claims, wherein inlet connection (31) and the second outlet connection (33) are female connections, in particular female connections having an internal thread.

7. The adaptor tee according to any of the preceding claims, wherein the main body (20) has a cylindrical section of reduced diameter (24) adjacent to the second end, wherein said cylindrical section of reduced diameter (24) provides the first outlet connection (32), and
wherein the first outlet connection (32) is a male connection having an external thread on the cylindrical section of reduced diameter (24).

8. The adaptor tee according to any of the preceding claims, wherein the main body (20) has a first cylindrical section (21) having a first outer diameter and a second cylindrical section (22) having a second outer diameter, the first diameter being larger than the second diameter, and further has a third cylindrical section (23) having an outer diameter similar to the second outer diameter, the first cylindrical section (21) being located between the second and the third cylindrical sections (22, 23).

9. The adaptor tee according to claim 7 and 8, wherein the cylindrical section of reduced diameter (24) has an outer diameter smaller than the second outer diameter, and wherein the cylindrical section of reduced diameter (24) is located between the third cylindrical section (23) and the second end of the main body (20).

10. The adaptor tee according to any of the preceding claims, further comprising a reinforcement ring (50) positioned around a cylindrical section (21, 22, 23) of the main body.

11. The adaptor tee according to claims 5 and 10, wherein the reinforcement ring is positioned around the second cylindrical section (22).

12. A filtration system comprising:
- a filtration vessel (101) having a permeate outlet port (105),
- a header (102) for collecting permeate, the header having an inlet (104),
- an adaptor tee (10) according to any of the preceding claims, wherein the inlet connection (31) of the adaptor tee is connected to the permeate outlet port (105), and wherein a conduit (103) is connected between the second outlet connection (33) of the adaptor tee (10) and the inlet (104) of the header (102).

13. The filtration system according to claim 12, further comprising a sample valve (41) mounted with a fluid inlet side to the first outlet connection (32) of the adaptor tee (10).

14. The filtration system according to claim 13, further comprising a probe plug (42) having a sample outlet port including an inner O-ring (43), wherein the probe plug (42) is mounted to a fluid outlet side of the sample valve (41).

15. A method of manufacturing an adaptor tee, comprising the steps of
- providing a main body (20) of a single piece of plastic material having a cylindrical shape extending along an axial direction (14) between opposing first and second ends,
- machining an inlet opening (11) in the first end, a first outlet opening (12) in the second end and a first flow passage (15) extending through the main body (20) between the inlet opening (11) and the first outlet opening (12) into the main body (20),
- machining a second outlet opening (13) through the lateral surface of the main body (20) and a second flow passage (19) extending between the first flow passage (15) and the second outlet opening (13) into the main body (20) such that the second flow passage (19) meets the first flow passage (15) in a T-junction,
wherein the machining is performed such that at the inlet opening, an inlet connection (31) is provided, and that at the first and second outlet openings (12, 13), first and second outlet connections (32, 33) are provided, respectively,
wherein the machining of the first and second flow passages (15, 19) is performed such that the first flow passage (15) has a first section (16) having a first inner diameter and a second section (17) having a second inner diameter smaller than the first inner diameter, the T-junction being located in the first section (16), and that the second flow passage (19) has a third inner diameter larger than the second inner diameter.
